# EUROPÄISCHE PATENTSCHRIFT

(11) **EP 0 686 099 B1**
(45) Veröffentlichungstag und Bekanntmachung des Hinweises auf die Patenterteilung: **21.05.1997**
(21) Anmeldenummer: 94909093.0
(22) Anmeldetag: 01.03.1994
(51) Int. Cl.: B60G 7/00, B60K 5/12

(54) **LENKER, INSBESONDERE FÜR RADAUFHÄNGUNGEN VON KRAFTFAHRZEUGEN**
GUIDE ROD, IN PARTICULAR FOR MOTOR-VEHICLE SUSPENSIONS
TIGE DE GUIDAGE, NOTAMMENT POUR SUSPENSIONS DE ROUES DE VEHICULES AUTOMOBILES

(30) Priorität: 04.03.1993 DE 4306740
(43) Veröffentlichungstag der Anmeldung: 13.12.1995
(73) Patentinhaber: ZF FRIEDRICHSHAFEN Aktiengesellschaft, 88038 Friedrichshafen (DE)
(72) Erfinder: ANNAST, Rudolf, D-94036 Passau (DE)
(86) Internationale Anmeldenummer: EP9400590
(87) Internationale Veröffentlichungsnummer: WO9420319

(56) Entgegenhaltungen:
- EP-A- 0 096 372
- EP-A- 0 242 883
- EP-A- 0 340 823
- DE-A- 2 354 202
- FR-A- 461 435
- FR-A- 2 465 927
- FR-A- 2 479 390
- PATENT ABSTRACTS OF JAPAN vol. 4, no. 99 (M-021) 16. Juli 1980 & JP,A,55 059 010 (TAKAGI TATSUYA) 2. Mai 1980

## Beschreibung

Die Erfindung bezieht sich auf einen Lenker, insbesondere für Radaufhängungen von Kraftfahrzeugen, der im wesentlichen aus einem langgestreckten, rohrförmigen Mittelstück mit zwei Anschlußteilen besteht. In jedem Anschlußteil ist ein Molekulargelenk zum Anschluß des Lenkers am abzustützenden Bauteil bzw. am Rahmen des Kraftfahrzeugs vorgesehen.

Ein Lenker für Radaufhängungen von Kraftfahrzeugen ist beispielsweise aus der EP-A-242 883 bekanntgeworden.

Diese Schrift offenbart einen Lenker, insbesondere für Radaufhängungen von Kraftfahrzeugen, im wesentlichen bestehend aus einem als Zylinder ausgebildeten, langgestreckten Mittelstück, in dem ein Kolben axial beweglich geführt ist und zwei Anschlußteilen, wobei eines der zwei Anschlußteile ein Molekulargelenk aufnimmt, wobei eines der Anschlußteile am Kolben und das andere Anschlußteil am Zylinder befestigt ist und wobei der Kolben an seinen Enden über zwei schwingungsdämpfende Elemente gegenüber dem Zylinder abgestützt ist.

Bei Kraftfahrzeugen, wie z. B. Autobussen, spielt der Komfort eine immer größere Rolle. Durch zielgerichtete Maßnahmen der Hersteller von Kraftfahrzeugen wird das Geräuschniveau im Fahrgastraum immer stärker gedrückt. Im Zuge dieser Bemühungen kommen Störfrequenzen der übrigen Aggregate immer stärker zur Geltung. Derartige Störfrequenzen können beispielsweise von der Achse stammen. Sie werden meistens durch Verzahnungsgeräusche ausgelöst. Maßnahmen, die auf eine Absenkung des Geräuschniveaus an der Achse bzw. auch eines Getriebes abzielen, sind äußerst aufwendig. Erschwerend kommt hinzu, daß im Fahrzeugrahmen und im Fahrzeugaufbau oft Resonanzschwingungen anzutreffen sind, die auch durch kleine Amplituden angeregt werden können.

Die Geräusche werden überwiegend durch Körperschall ins Fahrzeug geleitet. Demgegenüber kann die Übertragung von Luftschall ausreichend eingedämmt werden und findet demzufolge kaum statt.

Bei herkömmlichen Lenkern zur Aufnahme bzw. Abstützung von Achsen, Getrieben oder ähnlichen Bauteilen, werden aus Festigkeitsgründen Molekulargelenke eingesetzt. Diese weisen eine große Shore-Härte auf. Diese sozusagen harten Gelenke nehmen nur sehr niedrigfrequente Schwingungen und Verformungen von Fahrzeugteilen auf. Hochfrequente Schwingungen, wie sie Schallwellen darstellen, passieren ungehindert diese Gelenke.

Der vorliegenden Erfindung liegt die Aufgabe zugrunde, einen Lenker zu schaffen, bei dem die Übertragung von Körperschall unterbunden ist, bei dem jedoch alle anderen Eigenschaften erhalten bleiben.

Die der Erfindung zugrunde liegende Aufgabe wird durch einen, auch die kennzeichnenden Merkmale des Anspruches aufweisenden, gattungsgemäßen Lenker gelöst.

Ein Lenker mit den vorstehend genannten Merkmalen zeichnet sich dadurch aus, daß die Übertragung von Körperschall über die schwingungsdämpfenden Elemente ausgeschlossen bleibt. Im übrigen entspricht der Lenker in seinen Eigenschaften einem üblichen, bekannten Lenker.

Gegenüber dem oben angeführten Stand der Technik bietet die Art der Lagerung des Endanschlages einen erheblichen Vorteil.

Die Lagerung der Endanschläge auf den Zapfen und den Kolbenstangen und die Lagerung der hülsenförmigen Elemente auf den Endanschlägen führt zu gut geführten, schwingungsdämpfenden Elementen, die einen deutlich verringerten, direkten Kontakt mit den Zapfen und den Kolbenstangen haben.

Weitere, für vorteilhaften Ausführungen der Erfindung wesentliche Merkmale sowie die daraus resultierenden Vorteile sind der nachfolgenden Beschreibung eines Ausführungsbeispiels zu entnehmen.

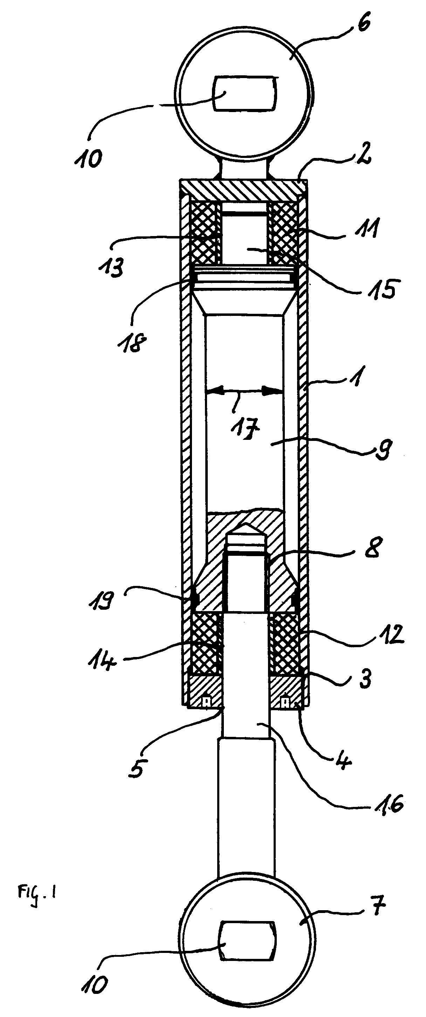

In der Abbildung ist ein Lenker im Längsquerschnitt in schematischer Darstellung wiedergegeben. Der Lenker besteht aus einem rohrförmigen Mittelstück, welches als Zylinder 1 ausgebildet ist. An seinem, in der Zeichnung obenliegenden Ende ist der Zylinder 1 mit einem Boden 2 beispielsweise durch Verschweißen geschlossen.

An seinem unteren Ende - bezogen auf die Zeichnung - weist der Zylinder ein Innengewinde 3 auf, in das eine Ringmutter 4 eingeschraubt ist. Die Ringmutter 4 verfügt über eine Bohrung 5.

Der Lenker wird durch ein Anschlußteil 6 am Zylinder 1 (mit dem Boden 2 verschweißt) und ein Anschlußteil 7 vervollständigt. Das Anschlußteil 7 ist mit einem Gewinde 8 in einen Kolben 9 eingeschraubt.

In den Anschlußteilen 6 und 7 ist jeweils ein Molekulargelenk 10 eingelassen.

Aus der Zeichnung ist ersichtlich, daß der Kolben 9 im Zylinder 1 axial beweglich geführt ist. Er ist zudem über zwei schwingungsdämpfende Elemente 11 und 12 gegenüber dem Zylinder 1 abgestützt. Hierzu sind die schwingungsdämpfenden Elemente 11 und 12 auf Hülsen 13 und 14 gelagert. Die Hülsen 13 und 14 weisen eine geringere axiale Längenerstreckung als die schwingungsdämpfenden Elemente 11 und 12 auf. Sie haben die Funktion von Endanschlägen.

Die hülsenförmigen Endanschläge sind ihrerseits auf einem Zapfen 15 des Kolbens 9 (Hülse 13) bzw. auf einer stangenförmigen Führung 16 des Anschlußteils 7 gelagert.

Aus der Zeichnung ist ersichtlich, daß der mittlere Bereich des Kolbens 9 - bezogen auf seine Längenerstreckung - einen kleineren Durchmesser, der mit der Bezugsziffer 17 bezeichnet ist, aufweist. Der Kolben 9 ist im übrigen über Kolbenführungsringe 18 und 19 an der Innenwandung des Zylinders 1 geführt.

### Bezugszeichen

- 1: Zylinder
- 2: Boden
- 3: Innengewinde
- 4: Ringmutter
- 5: Bohrung
- 6: Anschlußteil
- 7: Anschlußteil
- 8: Gewinde
- 9: Kolben
- 10: Molekulargelenk
- 11: Element
- 12: Element
- 13: Hülse
- 14: Hülse
- 15: Zapfen
- 16: Führung
- 17: Durchmesser
- 18: Kolbenführungsring
- 19: Kolbenführungsring

## Patentansprüche

1. Lenker, insbesondere für Radaufhängungen von Kraftfahrzeugen, mit einem als Zylinder (1) ausgebildeten, langgestreckten Mittelstück, in dem ein Kolben (9) axialbeweglich geführt ist und zwei Anschlußteilen (6, 7), die jeweils ein Molekulargelenk aufnehmen und von denen eines am Kolben (9) und eines am Zylinder (1) befestigt ist, wobei der Kolben (9) über zwei schwingungsdämpfende, hülsenförmig ausgebildete Elemente (11, 12) , die auf Endanschlägen (13, 14) mit einer geringeren axialen Länge gelagert sind, gegenüber dem Zylinder (1) abgestützt ist, dadurch **gekennzeichnet,** daß die Endanschläge (13, 14) auf einem Zapfen (15) des Kolbens (9) und einer stangenförmigen Führung (16) des Anschlußteiles (7) gelagert sind.

## Claims

1. A guide rod intended in particular for motor-vehicle suspension systems, provided with an elongated centre piece in the form of a cylinder (1), wherein a piston (9) is guided in axial direction and with two connector elements (6, 7), each of which houses a molecular joint, with the one of said connector elements being fastened to the piston (9), and the other one of said connector elements being fastened to the cylinder (1), wherein the piston (9) is supported in the cylinder (1) by means of two vibration damping elements in the form of sleeves (11, 12), which are in turn supported on end stops (13, 14) of shorter axial length, characterised in that the end stops (13, 14) are supported on a journal (15) attached to the piston (9) and a bar-shaped guide (16) attached to the connector element (7).

## Revendications

1. Bras oscillant, en particulier pour suspensions de roues de véhicules automobiles avec une pièce centrale allongée, en forme de cylindre (1), dans laquelle est guidé un piston (9) mobile axialement et avec deux pièces de raccord (6, 7) auxquelles est fixé respectivement un joint moléculaire et dont l'un est fixé au piston (9) et l'autre au cylindre (1), en tenant compte du fait que le piston (9) est supporté par rapport au cylindre (1) à travers deux éléments réalisés en forme de douille (11, 12) amortissant les vibrations et lesquels sont logés sur des butées de fin de course (13, 14) d'une longueur axiale mineure, **caractérisé** en ce que les butées (13,14) sont logées sur un tourillon (15) du piston (9) et sur un guide en barres (16) de la pièce de raccord (7).
